(19) Europäisches Patentamt
European Patent Office
Office européen des brevets

(11) **EP 4 253 940 A1**

(12) **EUROPEAN PATENT APPLICATION**

(43) Date of publication:
**04.10.2023 Bulletin 2023/40**

(21) Application number: **22166082.2**

(22) Date of filing: **31.03.2022**

(51) International Patent Classification (IPC):
**G01N 21/3577** $^{(2014.01)}$    **G01N 21/05** $^{(2006.01)}$

(52) Cooperative Patent Classification (CPC):
**G01N 21/3577; G01N 21/05**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Universiteit van Amsterdam
1012 WX Amsterdam (NL)**

(72) Inventors:
• **WOUTERSEN, Sander
1012 WX Amsterdam (NL)**
• **GIUBERTONI, Giulia
1012 WX Amsterdam (NL)**

(74) Representative: **V.O.
P.O. Box 87930
2508 DH Den Haag (NL)**

(54) **SIZE-SELECTIVE OPTICAL SPECTROSCOPY**

(57)    A spectroscopic method and system for simultaneously analyzing molecular structure and size, of a single compound or of a mixture (M) of different molecules (M1,M2). A liquid volume (V) is provided with the mixture (M) having an initial concentration difference ($\Delta$M) between different sub-volumes (Vm,Vs) which are fluidly interconnected and arranged at different locations along a spatial coordinate (X). A time-dependent spectrum ($\alpha$[t,v]) is measured of light (L) interacting with part of the liquid volume (V), while the concentration difference ($\Delta$M) at least partially equilibrates by diffusion of the different molecules (M1,M2) between the different sub-volumes (Vm,Vs) along the spatial coordinate (X). The time-dependent spectrum ($\alpha$[t,v]) comprises respective distinct spectral signatures ($\alpha$1,$\alpha$2) of the respective different molecules (M1,M2). Each spectral signature ($\alpha$1,$\alpha$2) can have a distinct time-dependent evolution ($\tau$1,$\tau$2) in the time-dependent spectrum ($\alpha$[t,v]) resulting from respective distinct diffusion characteristics (D1,D2) of the different molecules (M1,M2).

FIG 1A

## Description

TECHNICAL FIELD AND BACKGROUND

The present disclosure relates to spectroscopic methods and systems for simultaneously analyzing the chemical structure and the size of a compound, or a mixture of compounds with different molecular or particle sizes.

Identifying and/or characterizing molecular structure and size is important in many fields, ranging from daily practice in the synthesis lab to biomedicine and the industry. Although a broad range of techniques is available, in many cases the simultaneous characterization of structure and size of chemical species is still challenging, especially in mixtures.

On the one hand, various size-selective techniques exist, typically having a specific field of application. For some applications, gas chromatography can be used to separate and analyze compounds that can be vaporized without decomposition. For other or further applications, dynamic light scattering can be used to determine the size distribution profile of small particles in suspension or polymers in solution. For other or further applications, gel electrophoresis can be used to separate and analyze macromolecules such as DNA, RNA and proteins, and their fragments, based on their size and charge. Unfortunately, these and other size-selective techniques may provide limited information on the molecular structure itself. As a partial solution, Nuclear Magnetic Resonance Diffusion Ordered Spectroscopy (NMR-DOSY) can be used to characterize mixed compounds. However, NMR-DOSY requires an NMR-spectrometer facility, and there are many cases where the technique is not applicable, e.g. paramagnetic compounds, compounds having insufficient NMR signal, or compounds with complex and/or overlapping NMR spectra.

On the other hand, various spectroscopic techniques exist which have widespread application by measuring how different forms of light interact with atoms and molecules. Typically, these spectroscopic techniques involve the measuring of (wavelength dependent) absorption, emission, reflection, and/or scattering of a light beam illuminating a sample. For many applications, infrared (IR) spectroscopy, also referred to as vibrational spectroscopy, is used to measure the interaction of matter with infrared light (e.g. between 0.8 - 250 pm, up to 1 mm) and/or mid-infrared light (typically between 2.5 - 25 $\mu$m, i.e., 4000 - 400 cm$^{-1}$). For example, a (linear) IR absorption spectrum can be used to measure respective vibrational modes in various molecules. Also other or further related techniques can be used, such as Raman spectroscopy and (vibrational) circular dichroism. Also other or further linear or non-linear techniques can be used, such as two-dimensional pump-probe or photon-echo spectroscopy, et cetera. Various spectroscopic techniques can also be used with other or further wavelengths of light, such as ultraviolet and/or visible spectroscopy (UV-Vis).

These and other spectroscopic techniques based on light-matter interaction can be advantageously used to study and identify chemical substances or functional groups in solid, liquid, or gaseous forms. For example, advantages for characterizing various molecules using known spectroscopic techniques may include the fact that these techniques are easy, simple, non-invasive, label-free, and the peaks in the spectrum provide direct information on the chemical structure and conformation of a compound. However, spectroscopy techniques are often not sensitive to molecular/particle size; and in the case of mixtures, the known spectroscopic techniques also have unfortunate limitations such as overlapping spectral signatures with relatively broad peaks, especially in liquid solution, which can make it difficult to distinguish peaks and/or identify compounds. These and other limitations have thus far limited use of the known spectroscopic techniques for characterizing molecular size, and for directly analyzing mixtures.

Accordingly, there remains a need for further improvements in spectroscopic methods and systems for the simultaneous analysis of molecular structure and size, in particular in various mixtures, e.g. to alleviate limitations of known spectroscopic techniques while maintaining at least some of their advantages.

SUMMARY

Aspects of the present disclosure relate to methods and systems for spectroscopically analyzing molecular structure and/or size, in particular in a mixture of different molecules. A liquid volume, e.g. formed in a container or sample cell, is provided with the mixture in such a way that initially a concentration difference of the molecules exists between different interconnected sub-volumes of the liquid volume. A time-dependent spectrum is measured of light interacting with a respective measurement location in a respective sub-volume, while the concentration difference at least partially equilibrates by diffusion of the different molecules between the different sub-volumes. So, the time-dependent spectrum may comprise spectral signatures of the different molecules, wherein each spectral signature may have a distinct time-dependent evolution in the time-dependent spectrum resulting from respective distinct diffusion characteristics of the different molecules.

As a basic principle, it is recognized there exists a correlation between the diffusion coefficient "D" of a particle, e.g. a molecule or an aggregate of molecules, and its size "R". This can be modelled using the Stokes-Einstein relation. According to this relation, large particles diffuse more slowly than small particles. So, the measured changes in spectral intensity at a specific location in a sample, having an initial concentration gradient, can be related to the size of the respective particle and/or molecule diffusing from one location to another location (D~ 1/R, with a proportionality constant determined by the solvent viscosity). This principle can be used to simultaneously determine the sizes and spectra of the species present in a mixture of different molecules.

In an advantageous application of the present teachings, the inventors have designed a liquid sample cell that makes it possible to separate the spectra of different molecules in a mixed solution. These and other devices can be used to produce multi-dimensional spectra, in which the different molecules can be separated based at least on their diffusion characteristics.

For the specific application in the infrared domain, the inventors refer to the present technique as Diffusion Ordered-InfraRed SpectroscopY ("IR-DOSY"). For example, the two-dimensional IR-DOSY spectrum may simultaneously provide the IR spectra and diffusion constants (and hence the size) of different compounds in a mixture. Compared to other size selective techniques, the IR vibrational frequencies in an IR-DOSY spectrum provide direct information on the chemical structure. Of course it will be recognized that, while IR-DOSY spectra may have superficial similarities to NMR-DOSY spectra, the operational principles of IR and NMR-DOSY are entirely different. Furthermore, advantages of IR-DOSY compared to existing methods may include that it is easy, simple, non-invasive, and does not require any sample preparations, nor suffer from some of the disadvantages of NMR, e.g. as noted in the background section above.

In preferred embodiments, as described herein, the system comprises a specially constructed liquid cell for IR transmission spectroscopy, combined with a standard syringe pump to inject the solution and solvent. Most preferably, the cell fits into the standard liquid-cell mount of any standard FTIR (Fourier-Transform IR) spectrometer. Alternatively, or additionally, also an IR microscope can be used to scan the sample, as described herein. Using the syringe pump, the sample solution (M) can be injected into one entrance, and pure solvent (S) into another entrance. Specifically, the sample solution (M) and its solvent (S) are injected into a thin space between two infrared-transparent windows, in such a way that the two liquids are in contact at a constant parallel flow. After the pumping is stopped (at T=0), the dissolved compounds may diffuse into the solvent-filled half of the cell, with a rate that depends on their size. The time-dependent infrared absorption spectrum can be measured, e.g., at a position in the sample space where there was initially only solvent. As time progresses, the solute molecules start to appear in the IR spectrum, with the spectral intensities growing at different rates depending on the size of the compounds. Since the IR beam in a standard FTIR spectrometer typically has a diameter of several millimeter, the IR spectrum of a specific region of the cell can be selected by means of an adjustable optical slit, e.g. having a sub-mm width. Also other spatial selection can be used such as a focused beam at a specific location in the sample cell.

The present teachings thus provide a user-friendly and simple way to simultaneously characterize size and chemical structure of molecules, molecular aggregates/complexes, and small particles (of course also formed of molecules). The adjustable slit position and width make it possible to tune the range of sizes sampled by the device: larger-sized particles (such as nanoplastics) may take a relatively long time to diffuse into the measurement region, but the measurement time can be made arbitrarily short, e.g. by moving the slit closer to the liquid-liquid contact line between sample solution and the solvent.

BRIEF DESCRIPTION OF DRAWINGS

These and other features, aspects, and advantages of the apparatus, systems and methods of the present disclosure will become better understood from the following description, appended claims, and accompanying drawing wherein:

FIGs 1A-1C illustrate measuring a mixture of different molecules during equilibration of a concentration difference;

FIGs 2A-2C illustrate measurement and processing of a time-dependent spectrum;

FIGs 3A-3C illustrate an initial concentration difference between different sub-volumes being provided by a set of parallel flows;

FIGs 4A-4C illustrate aspects of a sample cell configured to provide parallel flows in an elongate flow channel;

FIG 5A illustrates further aspects of the sample cell;

FIG 5B illustrates a system for spectroscopically analyzing a mixture;

FIGs 6A and 6B illustrate photographs of a positioning device configured to adjust a measurement location in sample cell;

FIG 7A illustrates an infrared microscope image of parallel flows in an elongate flow channel;

FIGs 7B and 7C illustrate infrared microscopes images at different times after the flows have stopped;

FIG 8A illustrates time-dependent infrared absorption spectra for a measurement of a mixture of different molecules diffusing into view of a measurement location;

FIG 8B illustrates a corresponding diffusion-ordered spectrogram;

FIG 9A and 9B illustrate further spectrograms;

FIG 10 illustrates two-dimensional spectra of a mixture based on subsequent scans;

FIGs 11A-11C illustrate a liquid volume being provided with a mixture having an initial concentration difference by removing a barrier between different sub-volumes;

FIGs 12A-12C illustrate a liquid volume with a mixture having an initial concentration difference between a first sub-volume where the mixture is added and a second sub-volume comprising the measurement location.

DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

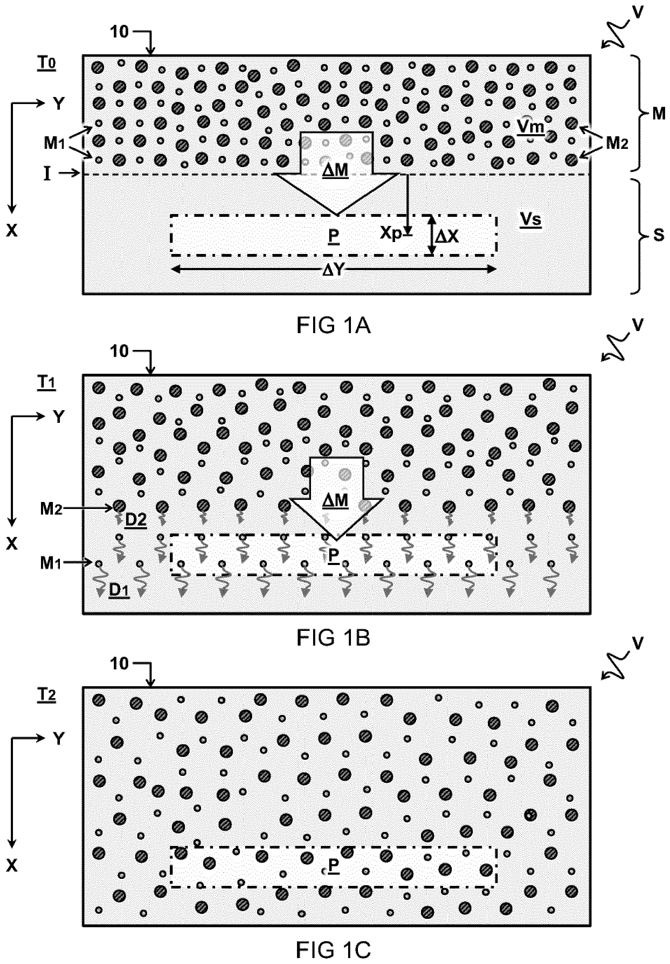

FIGs 1A-1C illustrate measuring a mixture "M" of different molecules M1,M2 during equilibration of a concentration difference ΔM. In some embodiments, e.g. as shown, a liquid volume "V" is provided with the mixture "M" (i.e. molecules to be analyzed) having an initial concentration difference ΔM between different sub-volumes Vm,Vs of the liquid volume "V". In one embodiment, the different sub-volumes Vm,Vs are fluidly interconnected, e.g. directly adjacent, preferably across a liquid interface "I". So, the sub-volumes Vm,Vs may be integrally connected and/or form a contiguous liquid volume "V". In another or further embodiment, the different sub-volumes Vm,Vs are and arranged at different locations along at least one spatial coordinate "X". In other or further embodiments, a time-dependent spectrum is measured of light interacting with the liquid volume "V" at a measurement location "P" in (at least) one of the different sub-volumes Vm,Vs, while the concentration difference ΔM at least partially equilibrates by (translational) diffusion of the different molecules M1,M2 between the different sub-volumes Vm,Vs along the spatial coordinate "X".

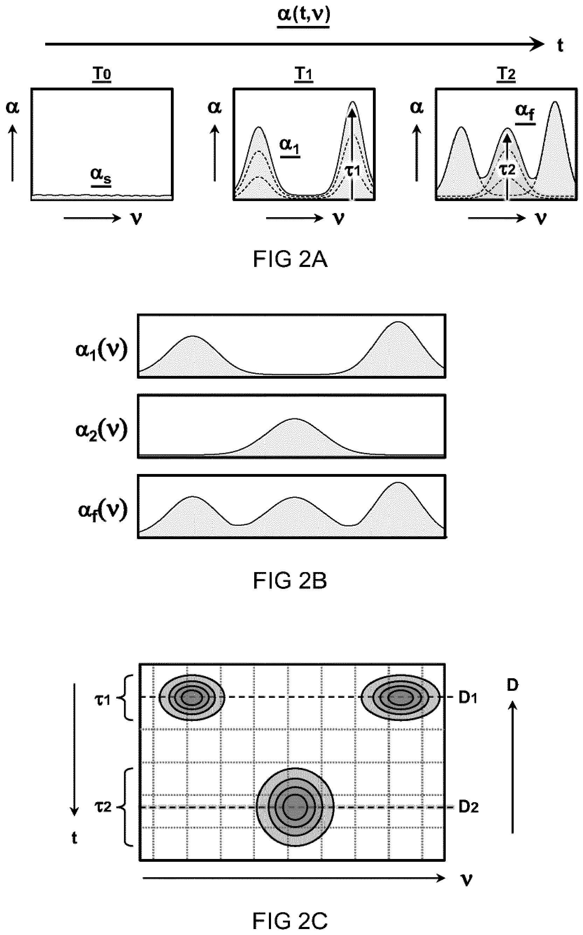

FIGs 2A-2C illustrate processing of a time-dependent spectrum α(t,v), e.g. obtained according to the methods and systems described herein. For example, the time-dependent spectrum a(t,v) may comprise one or more of an infrared spectrum, a visible light spectrum, a UV spectrum, an absorption spectrum, a transmission spectrum, a reflection spectrum, a scatting spectrum, a Raman spectrum, et cetera. In some embodiments, the time-dependent spectrum a(t,v) comprises respective distinct spectral signatures α1,α2 of the respective different molecules M1,M2. In other or further embodiments, each spectral signature α1,α2 has a distinct time-dependent evolution τ1,τ2 in the time-dependent spectrum a(t,v) resulting from respective distinct diffusion characteristics D1,D2 of the different molecules M1,M2.

In some embodiments, the mixture "M" is analyzed based on the time-dependent spectrum a(t,v). In one embodiment, analyzing the mixture "M" comprises identifying one or more of the different molecules M1,M2 in the mixture "M" based on the time-dependent spectrum a(t,v). For example, the different molecules M1,M2 can be identified based on a combination of spectral features in the respective spectral signature α1,α2. In another or further embodiment, analyzing the mixture "M" comprises determining one or more (absolute or relative) respective concentrations of the different molecules M1,M2 in the mixture "M". For example, the concentration can be derived using a reference or known spectral intensity of the respective spectral signature α1,α2. In another or further embodiment, analyzing the mixture "M" comprises determining a molecular characteristic, e.g. molecular structure and/or configuration, of one or more of the different molecules M1,M2 in the mixture "M". For example, using infrared spectroscopy, various vibrational modes of the different molecules M1,M2 can be measured. In another or further embodiment, analyzing the mixture "M" comprises determining a frequency (or wavelength) and/or amplitude of spectral features, e.g. absorption peaks, in one or more spectral signatures α1,α2 of the different molecules M1,M2. Also other or further (as such known, or yet to be discovered) spectral analysis techniques can be used.

In some embodiments, the time-dependent spectrum a(t,v) is decomposed to determine, e.g. isolate, the respective distinct spectral signatures α1,α2 of the different molecules M1,M2 and/or to determine the respective distinct diffusion characteristics D1,D2 of the different molecules M1,M2. In other or further embodiments, the spectroscopic analysis of the a mixture "M" comprises identifying one or more molecules M1,M2 in the mixture "M" based on a priori known spectral signatures α1,α2 of different molecules and/or based on a priori known diffusion characteristics D1,D2 different molecules. For example, the identification comprises finding, for each component in the time-dependent spectrum

$\alpha$(t,v), a molecule having the closest matching spectral signature and/or closest matching diffusion characteristics. As will be appreciated, even matching just the spectral signature, which can be better isolated using the diffusion-ordered spectrum, may provide substantially improved identification, e.g. compared to a conventional spectrum. Furthermore, this can be improved by alternatively, or additionally, matching the measured diffusion characteristics.

In some embodiments, the mixture "M" comprises nanoscopic and/or microscopic particles. For example, each particles may comprise a single molecules or particles can be formed from aggregates of the same or different molecules. Typically, such particles may have a size or diameter anywhere from less than a nanometer, up to one hundred micrometer, or even up to one thousand micrometer, or more. For example, protein aggregates may have an average size or diameter less than one micrometer, less than one hundred nanometer, or even less than ten nanometer. For example, microscopic particles have an average size or diameter more than one hundred nanometer, more than one micrometer, more than ten nanometer, or even more than one hundred nanometer, e.g. up to one millimeter, or more.

Possibly, some or all of the particles in the mixture "M" may have essentially the same or similar spectral features and/or overlapping spectral peaks, but different sizes. For example, the mixture "M" comprises molecules and/or particles, which may include one or more of the following: molecular ions, molecules, molecular complexes, supramolecular structures, polymers, protein aggregates, (self-assembling) protein fibrils, amyloids, transition-metal complexes, plastic particles, et cetera. For these and other embodiments, the diffusion characteristics can provide crucial information, e.g. about the (relative and/or absolute) size of the particles, which is difficult or impossible to measure in other ways, especially in a (native) liquid solution. For example, the present teachings can be advantageously applied to measure pollution of water by nanoscopic and/or microscopic (plastic) particle, such as in sea water, river water, lake water, rain water, et cetera.

Without being bound by theory, the measured time-dependent spectrum a(t,v) can typically be represented by a matrix of measurement data. For example, each row (or column) of the matrix can be formed by a respective spectrum measured at a specific time. In general, such matrix can be decomposed into different spectral components and/or temporal components. In some embodiments, the matrix can be decomposed and written as the inner product of columns with respective time-dependent evolutions $\tau 1, \tau 2$, e.g. relative concentrations as function of time "t"; and respective rows with spectral signatures $\alpha 1, \alpha 2$, e.g. spectral intensity as function of wavelength or frequency "v":

$$[\alpha(t, v)] = [\tau_1(t) \quad \tau_2(t)] \cdot \begin{bmatrix} \alpha_1(v) \\ \alpha_2(v) \end{bmatrix}$$

Of course the rows and columns can also be reversed and/or transposed. In principle, decomposition is more feasible when the time-dependent evolutions $\tau 1, \tau 2$ are more linearly independent, e.g. when the diffusion characteristics D1,D2 are clearly distinct; and the spectral signatures $\alpha 1, \alpha 2$ are more linearly independent, e.g. when the different molecules have clearly distinct spectral signatures such as distinct absorption peaks. For example, the linear independence and/or contribution of different components can be determined based on a singular value decomposition (SVD) of the matrix, e.g. based on the singular values resulting from such decomposition. Of course also other data analysis methods can be used. Alternative to the measurement data forming a two-dimensional matrix, also measurement data stored in matrices with more than two dimensions can be used, e.g. with one or more additional parameters varying along the third, or further dimension. For example, a subsection of the higher dimensional matrix can be used, or the higher dimensional matrix can be processed in any other way.

In some embodiments, decomposition is effected by modelling the time-dependent evolutions $\tau 1, \tau 2$ and fitting the spectral signatures $\alpha 1, \alpha 2$, or vice versa. For example, the time-dependent evolutions $\tau 1, \tau 2$ can be modelled according to a diffusion model using one or more diffusion characteristics D1,D2 as parameters. Also other variable or fixed parameters may be included, such as the distance Xp between the initial interface "I" and the measurement location "P" and/or the spread in distances $\Delta X$. In one embodiment, the time-dependence is modeled using a formula obtained by solving one or more diffusion equations. In another or further embodiment, a mathematical procedure is used to transforms the time-dependence axis of the two-dimensional data set into a diffusion-constant axis (or equivalently, size axis). For example, the mathematical procedure may include inverse Laplace transform or PCA combined with global fitting.

In one embodiment, the time-dependent concentration of a respective molecule forming a particle, diffusing through the liquid volume is modeled based on respective diffusion characteristics, e.g. a respective known or unknown diffusion coefficient "D". For example, the time-dependent concentration of each of the different molecules may modelled using a diffusion equation that can be written as

$$\frac{\partial c(x,t)}{\partial t} = D \frac{\partial^2 c(x,t)}{\partial x^2},$$

where the value of D depends on the molecular size. The time and position-dependent concentration can be derived based on a distance Xp, with optional spread $\Delta X$,

between the origin of the different molecules M1,M2 at T0, and the measurement location "P". For example, the diffusion equation models the different time-dependencies of the concentrations of the different molecules M1,M2 at the measurement location "P". Of course also other modelling of the diffusion can be used.

In another or further embodiment, the diffusion coefficient "D" is modelled according to the Stokes-Einstein equation, e.g. written as

$$D = \frac{k_B T_L}{6\pi \, \eta \, R}$$

where "$k_B$" is Boltzmann's constant; "$T_L$" is the absolute temperature of the liquid; "$\eta$" is the dynamic viscosity of the liquid; and "R" is the radius of an equivalent spherical particle. As will be appreciated, a measured diffusion coefficient for an unknown molecule can also be used to estimate the corresponding molecular mass and/or size, e.g. assuming this is correlated with the radius "R". If necessary, the experiment can also be repeated for different temperatures "$T_L$" and/or different solvents (to affect the dynamic viscosity). Of course also other or further modelling of the diffusion coefficient can be used such as the Einstein-Smoluchowski equation for diffusion of charged particles in an externally applied electric field. Accordingly, some embodiments may comprise determining at least one of the respective size, mass, and/or charge of the different molecules M1,M2 based on the measured diffusion characteristics D1,D2 and/or based on respective modelling thereof.

In some embodiments, e.g. as shown in FIGs 1A and 1B, a concentration difference ∆M, e.g. gradient, is formed when there is a difference in concentration of one or more, preferably each, of the molecules M1,M2 in the mixture "M" between a first location in the liquid volume "V" and a second location in the liquid volume "V". Preferably, the second location is at distance from the first location along at least one spatial coordinate "X". For example, there is a respective first concentration for (each of) the different molecules M1,M2 at the first location and a respective second concentration for (each of) the different molecules M1,M2 at the second location, wherein the respective second concentration is lower than the respective first concentration. Typically each molecule may have a respective concentration at the first location (in general not the same concentration for each molecule). Preferably, each of the different molecules M1,M2 is essentially absent at the second location to provide a strong contrast, e.g. change in absorption. As will be understood, the different molecules M1,M2 may (on average) diffuse along the spatial coordinate "X" through the liquid volume "V" according to a direction of the concentration gradient or difference ∆M and/or in accordance with their respective diffusion characteristics D1,D2. Accordingly, the different molecules M1,M2 may diffuse into view (or out of view) of the measurement location "P" at different times T1,T2 depending on respective diffusion characteristics D1,D2 of the different molecules M1,M2.

In one embodiment, e.g. as illustrated in FIG 2A, the measured spectrum at a first instance of time T1 essentially represents the spectral signature α1 of a first type of molecule M1 having the highest diffusion coefficient D1 (thus shortest arrival time τ1 at a distance from the initial position). In another or further embodiment, as also illustrated in FIG 2B, the measured spectrum at second instance of time T2 essentially represents a linear combination, e.g. sum, of the spectral signature α1 of the first type of molecule M1 and the spectral signature α2 of a second type of molecule M2. For example, the resulting individual spectral signatures α1,α2 and the final spectral signature αf (e.g. sum), are shown in FIG 2B. In FIG 2C, a two dimensional representation is shown, with on the horizontal axis the infrared frequency and on the vertical axis the value of the diffusion coefficient obtained by analyzing the time-dependent absorption intensity at each frequency. This allows to easily show the respective arrival times of the different molecules M1,M2 which can be used to determine the respective diffusion characteristics D1,D2, e.g. in combination with a known distance Xp between the measurement location "P" and the origin. Of course these figures merely represent a helpful illustration of the principle, where it will be understood that the present methods are similarly applicable for any combination of spectral signatures α1,α2 and time-dependent evolutions τ1,τ2 that are measurably distinct.

In some embodiments, e.g. as shown in FIG 1A, the concentration difference ∆M in the liquid volume "V" is provided by supplying a first concentration of the mixture "M" in a first sub-volume Vm. In one embodiment, the first sub-volume Vm is fluidly connected to a second sub-volume Vs comprising a liquid solvent "S" (suitable for dissolving the different molecules M1,M2). In another or further embodiment, the liquid solvent "S" in the second sub-volume Vs is provided (at least initially) without the mixture "M" and/or at a second concentration which is lower than the first concentration of the mixture "M" in the first sub-volume Vm. For example, the second concentration is lower than the first concentration by at least a factor two, three, five, ten, twenty, fifty, one hundred, one thousand, or more.

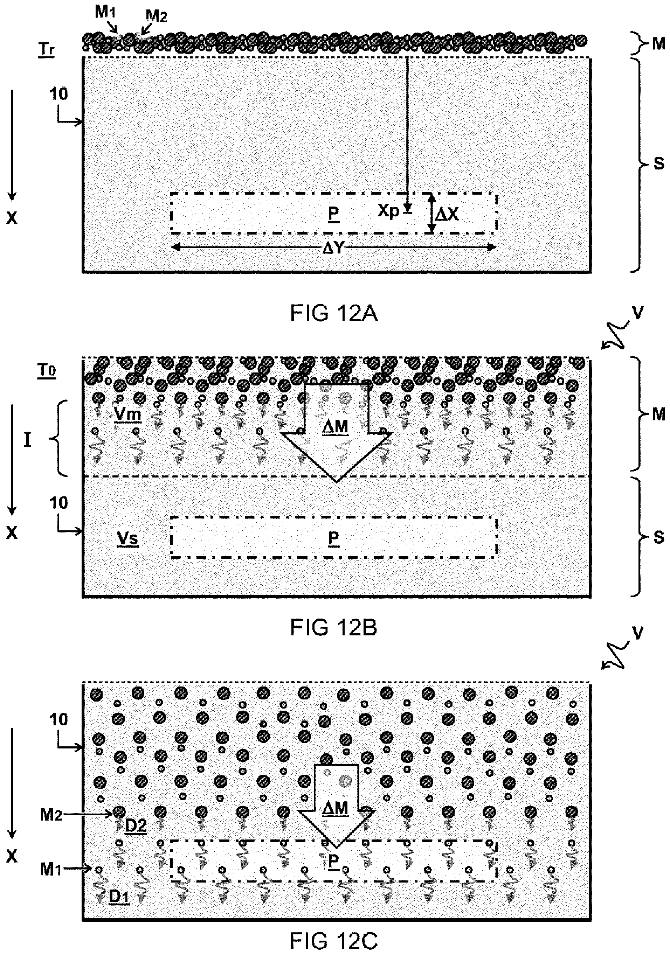

In some embodiments, the first sub-volume Vm comprises the mixture "M" dissolved in a liquid solvent. Preferably, the liquid solvent in the first sub-volume Vm is the same or similar solvent as in the second sub-volume Vs. Alternatively, different solvents can be used, e.g. (fully) miscible liquids. In principle, the mixture "M" can also start as an initial solid mixture, e.g. introduced by mixing into a liquid solvent; or start as a gaseous mixture, e.g. bubbled through a solvent (not shown). In such case, the mixture is preferably introduced into a (liquid) first sub-volume Vm before connecting to a second sub-volume Vs. Alternatively, or in addition, to initially providing the mixture "M" already dissolved in a liquid solvent, the mixture "M" can also be introduced into a liquid solvent while measuring, e.g. as shown in FIG 12A. When introducing the mixture "M" into a liquid solvent, it is preferred to introduce the mixture relatively gently and/or at a distance from the measurement location, e.g. avoiding turbulence which may affect the diffusion process. On the other hand it may be sufficient if there is at least some difference in the arrival time of the different molecules M1,M2 at the measurement location "P", e.g. due to their distinct diffusion characteristics D1,D2.

In some embodiments, the second sub-volume Vs is fluidly connected to the first sub-volume Vm via a liquid interface "I" in a direction Y perpendicular to the spatial coordinate "X". Other or further embodiments comprise measuring a time dependent spectrum a(t,v) of a light beam illuminating a measurement location "P" that is located to (exclusively or predominantly) expose part of the second sub-volume Vs while the first sub-volume Vm is in fluid connection, e.g. sharing a liquid interface, with the second sub-volume Vs to have the different molecules M1,M2 diffuse into view of the measurement location "P" at different times T1,T2 depending on respective diffusion characteristics D1,D2 of the different molecules M1,M2.

In some embodiments, initially, the first sub-volume Vm at one side of the liquid interface "I" essentially has a respective uniform concentration for each of the different molecules M1,M2 to be analyzed in the mixture "M". In other or further embodiments, initially, the second sub-volume Vs at the other side of the liquid interface "I" essentially does not contain the different molecules M1,M2 to be analyzed in the mixture "M". Of course, it will be understood that reference to the different molecules M1,M2, as used herein, refers to the molecules of the mixture "M" to be analyzed whereas the second sub-volume Vs may contain the same solvent molecules that may be considered as background in the measured time-dependent spectrum a(t,v).

Preferably, the liquid interface "I" provides a relatively high concentration gradient, e.g. sudden drop in concentration. For example, the concentration of the different molecules M1,M2 to be analyzed in the mixture "M" (i.e. not including the solvent) may change over a limited border region from more than 90% of the (average) uniform concentration in the first sub-volume Vm, to less than 10% of said concentration in the adjacent second sub-volume Vs (e.g. with the respective molecules to be analyzed absent in the second sub-volume Vs. For example, said border region across the initial interface I (along a direction of the spatial coordinate "X") may be less than two millimeter, less than one millimeter, less than one hundred micrometer, or even less than ten micrometers. The sharper the drop in concentration, and/or smaller the border region, the more well defined the starting position of the mixture, e.g. relative to the measurement location "P". For example, this well-defined distance may help to more clearly distinguish the molecules and/or more accurately calculate a respective diffusion constant. It may also help to select a measurement location "P" close to the initial interface "I", which may speed up the measurement process.

In some embodiments, the light "L" which is used for measuring the time-dependent spectrum a(t,v) exclusively interacts with the measurement location "P" in one of the different sub-volumes Vm,Vs, preferably with a measurement location "P" which is exclusively located in the second sub-volume Vs, at a measurement distance Xp from the first sub-volume Vm. For example, when the measurement location "P" in the second sub-volume Vs, the light L may measure an increasing absorption of the different molecules M1,M2 coming into view of the measurement location "P" as they diffuse from the first sub-volume Vm to the second sub-volume Vs. Alternatively, or additionally, when the measurement location "P" in the first sub-volume Vm, the light L may measure a decreasing absorption of the different molecules M1,M2 as some of them may diffuse out of view from the first sub-volume Vm to the second sub-volume Vs. It may also be envisaged to track respective concentrations at multiple measurement locations, e.g. one or more in each of the different sub-volumes Vm,Vs. For example, this may provide complementary and/or reference information.

In some embodiments, the measurement location "P" is located at a predetermined distance Xp from an initial interface "I" between the first sub-volume Vm and second sub-volume Vs. In other or further embodiments, the measurement location "P" has a length Y along a direction of the initial interface "I" and a width ΔX transverse to the length, wherein the width DX is smaller than the length, e.g. by at least a factor two, three, five, ten, or more. Preferably, the measurement location "P" has a limited measurement range ΔX at least along the spatial coordinate "X". For example, the measurement range ΔX is less than one millimeter, preferably less than half a millimeter, e.g. down to one hundred micrometer, or less. In one embodiment, the measurement location "P" is determined by an elongate aperture, e.g. slit 12c, having a length ΔY transverse, e.g. perpendicular, to the spatial coordinate "X" and having a width ΔX along the spatial coordinate "X" to determine, e.g. limit, the measurement range ΔX. Preferably, the length ΔY of the aperture is larger the width ΔX. Most preferably, the length ΔY is arranged parallel to the liquid interface "I". Advantageously, this may allow more light passing the aperture to improve signal strength while maintaining a well-defined position Xp. Alternatively, or additionally, measurements along a length of the aperture can be combined and/or averaged.

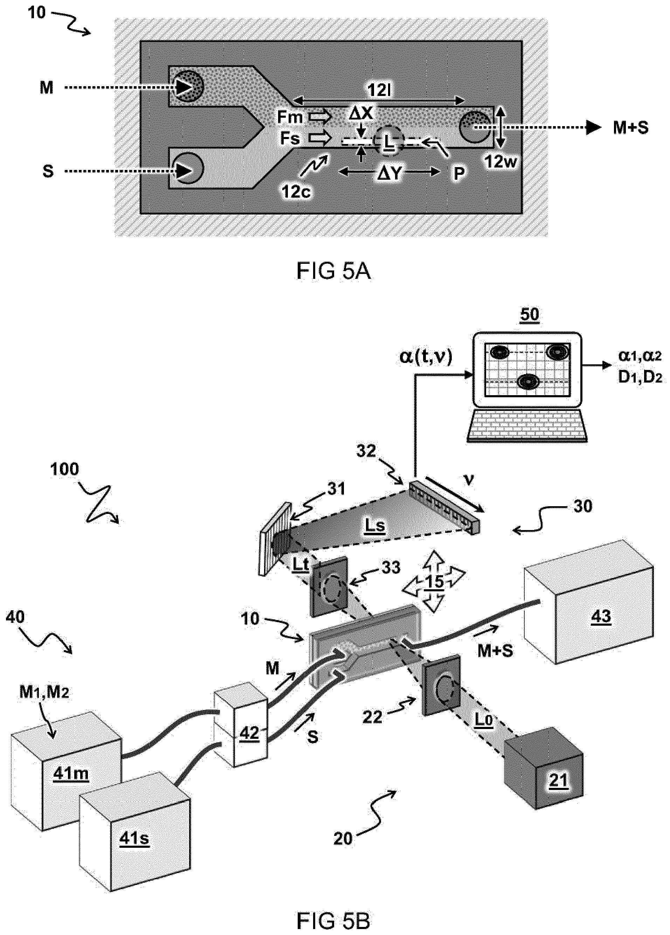

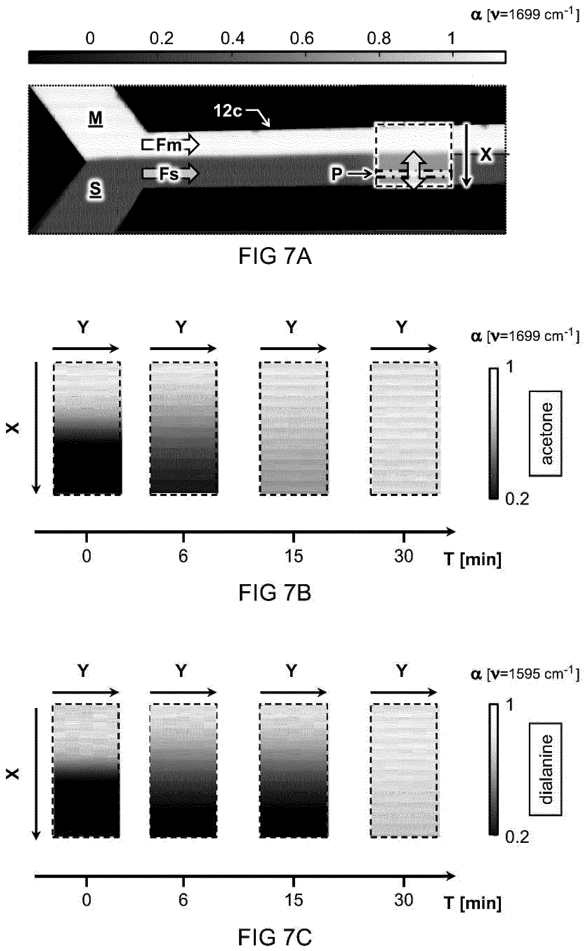

Alternatively, or in addition to using an aperture, it can also be envisaged to use a focused light beam (e.g. shown in FIG 5B). In one embodiment, the light beam "L" is focused at least in direction of the spatial coordinate "X". In another or further embodiment, the light beam "L0" is focused in both directions X,Y. In some embodiments, a focused light beam is scanned along different measurement locations. In one embodiment, the light beam is scanned in the direction "Y" perpendicular to the spatial coordinate "X". For example, different measurement having essentially the same distance Xp from the initial liquid interface "I" may be measured and combined, e.g. averaged. In another or further embodiment, the light beam is scanned in the direction of the spatial coordinate "X". For example, this may yield additional information about the progress of different molecules diffusing along this direction. Also combinations of "X" and "Y" scanning are possible, e.g. a two-dimensional scan as shown in FIGs 7A and 7B. The focused light beam can also be combined with a narrow aperture, e.g. to ensure the position of the range ΔX. For example, the focused light beam can be static or scanned along the length ΔY of the aperture.

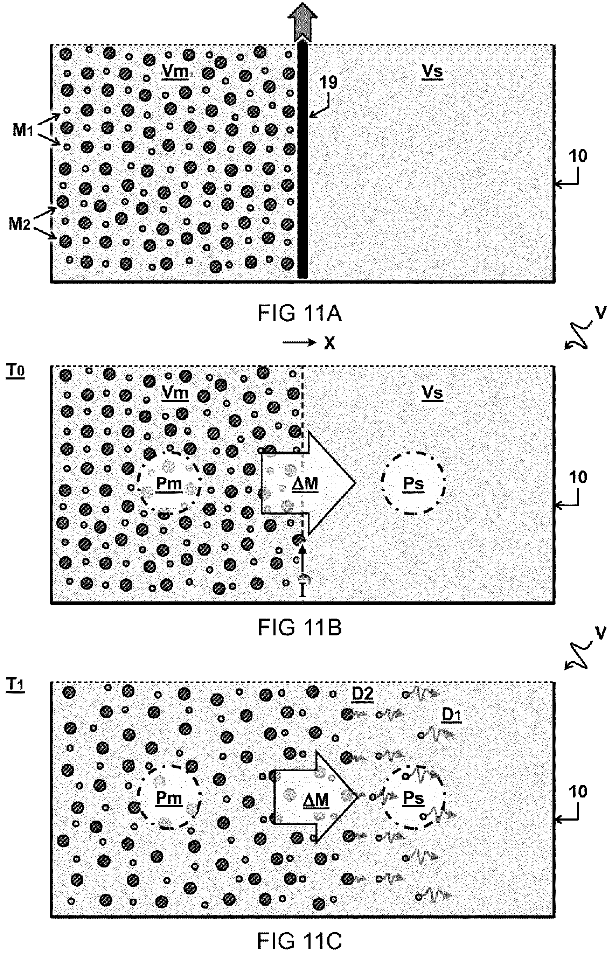

In principle, an initial concentration difference ΔM of the molecules M1,M2 between different sub-volumes Vm,Vs can be formed in various ways. In one embodiment, an initial concentration difference ΔM can be formed simply by introducing the mixture "M" at one location in the liquid volume "V" and measuring at another location in the liquid volume "V". For example, this is illustrated in FIG 12A. However, it may be difficult to fully control this process, e.g. to determine the diffusion distance travelled by the different molecules M1,M2 from the location where the molecules are introduced. In another or further embodiment, e.g. as shown in FIGs 11A and 11B, an initial concentration difference ΔM across a liquid interface "I" can be formed by initially providing different liquids separated by a barrier, e.g. thin sheet, and removing said barrier at the start of a measurement. However, it may be difficult to remove such barrier without introducing turbulence into the liquid volume "V" which could affect the diffusion. These and other disadvantages may be alleviated by creating the initial concentration difference ΔM according to preferred embodiments as disclosed in the following.

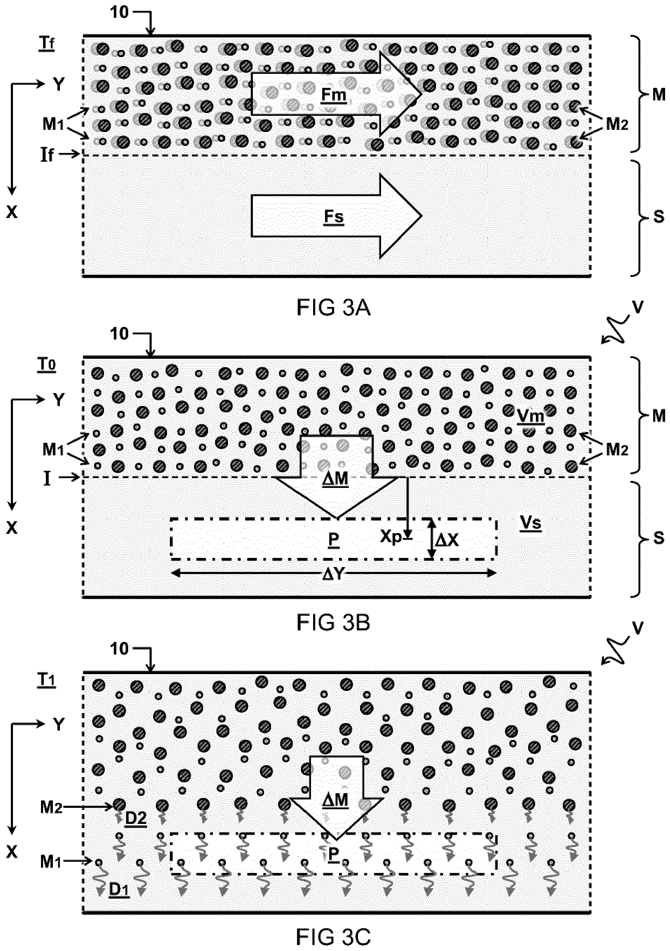

FIGs 3A-3C illustrate an initial concentration difference ΔM between different sub-volumes Vm,Vs being provided using a set of parallel flows Fm,Fs. In some embodiments, the first sub-volume Vm and second sub-volume Vs, as described herein, are provided by generating a set (e.g. pair) of parallel laminar flows Fm,Fs including a first flow Fm comprising the mixture "M" of different molecules and an adjacent, second flow Fs comprising the liquid solvent "S" (without the molecules, or at least a more dilute solution), with a flow interface "If" between at least part of the first flow Fm and second flow Fs. Other or further embodiments comprise halting the flows Fm,Fs to provide the (static) first sub-volume Vm formed by the halted first flow Fm and the (static) second sub-volume Vs formed by the halted second flow Fs. Preferably, the first sub-volume Vm is in fluid connection with the second sub-volume Vs across a liquid interface "I" formed by the former flow interface "If". Advantageously, by providing a laminar flow, the flow interface "If" can be relatively well defined and used as point of origin in the modelling. In principle, also more than two parallel flows can be used, e.g. three parallel flows wherein the same or different mixture is provided in the outer flows and a solvent without the mixture is provided in the center flow. Alternatively, different mixtures can be provided in two or more adjacent flows, and a solvent is provided in another, e.g. outer, flow. Preferably, the parallel flows are arranged in plane, although in principle also more complicated flows can be envisaged.

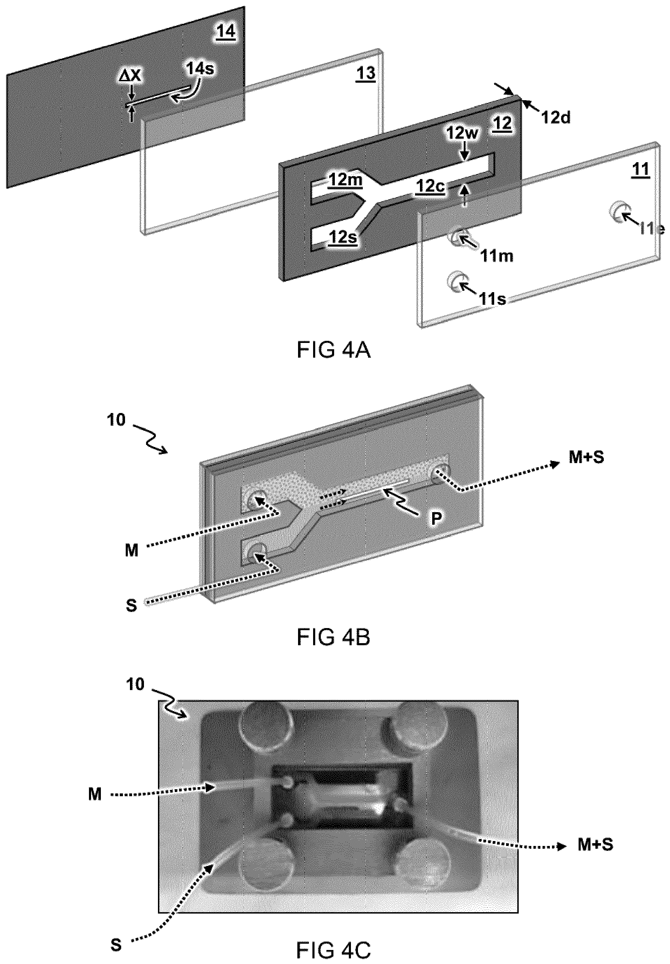

FIGs 4A-4C illustrate aspects of a sample cell 10 configured to provide parallel flows in an elongate flow channel 12c. Specifically, FIG 4A illustrates a possible configuration of elements forming the sample cell 10 in FIG 4B; and FIG 4C shows a photograph of an actual sample cell 10 similar to the illustration of FIG 4B. In some embodiments, e.g. as shown, the different sub-volumes Vm,Vs are provided in a sample cell 10, e.g. flow cell. In one embodiment, the sample cell 10 comprises an elongate flow channel 12c. In another or further embodiment, the sample cell 10 comprises a first input port 11m for introducing the mixture "M" with different molecules M1,M2 to be analyzed as a first flow Fm into the elongate flow channel 12c. In another or further embodiment, the sample cell 10 comprises a second input port 11s for introducing the liquid solvent "S" as a second flow Fs into the same elongate flow channel 12c. In another or further embodiment, the sample cell 10 comprises at least one exit port 11e for the mixture "M" and/or liquid solvent "S" to exit the elongate flow channel 12c. Preferably, , the input ports 11m,11s are connected to the elongate flow channel 12c via respective converging channels 12m,12s disposed adjacent each other in a direction (X) transverse to a length direction (Y) of the elongate flow channel 12c to create a set of parallel laminar flows Fm,Fs, including the first flow Fm and the second flow Fs, along the length of the elongate flow channel 12c towards the at least one exit port 11e.

In some embodiments, e.g. as shown in FIG 4A, the sample cell 10 comprises a front cover 11, a back cover 13, and a spacer 12. In one embodiment, the spacer 12 forms a flow structure 12m, 12s, 12c. In another or further embodiment, input and/or exit ports 11m, 11s, 11e are formed in the front cover 11. Of course one or more of these ports can also be formed in back cover 12 (not shown), and/or formed by a side opening in the spacer 12 (not shown). Alternative to the modular structure shown, one or more of the shown elements can also be integrated. Preferably, the front and/or back covers 11,13 are formed by a respective window allowing transmission of the light used for measuring a sample inside. For example, when the sample is measured by transmitting an infrared light beam through the sample, the front and back covers 11,13 may be formed by calcium fluoride windows, or similar material transparent in an infrared wavelength range. It can also be envisaged that only one of the covers is transparent, e.g. in a reflection based setup.

In some embodiments, an adjustable aperture is provided that allows adjusting a position (X and/or Y) and/or dimension (ΔX and/or ΔY) of the measurement location "P". In one embodiment, e.g. as shown, the sample cell 10 comprises or couples to a plate 14 with a slit 14s providing an aperture that determines a measurement location "P" in the elongate flow channel 12c. In one embodiment, the plate 14 is an integral part of the sample cell 10. In another embodiment, the plate 14 is separate from the sample cell 10. Preferably, the separate or integrated plate is adjustable, e.g. to allow adjustment of the measurement location "P" relative to the elongate flow channel 12c. Alternatively, to forming a slit using a single plate, it can also be envisaged to form a slit using two plates (not shown), e.g. between the edges of the plates, or partially overlapping slits. For example, this may allow adjusting also a width and/or length of the slit.

FIG 5A illustrates further aspects of the sample cell 10. In some embodiments, an opaque structure, e.g. plate, is provided comprising an elongate aperture, e.g. slit, arranged to expose a measurement location "P" corresponding to one of the parallel flows in the elongate flow channel 12c while blocking light passing anywhere else. Preferably, the elongate aperture has a length arranged along the length of the elongate flow channel 12c and a width (perpendicular to the length) less than a half width of the elongate flow channel 12c, e.g. less by at least a factor two, three, five or more. For example, the measurement location "P" may be arranged to expose a part of a bottom half and/or a part of a top half of the channel. Of course this may depend on the orientation of the sample cell 10 and/or specific connections of respective liquid supplies to the input ports 11m, 11s. Most preferably, a slit 14s for passing light into and/or out of the elongate flow channel 12c is arranged to expose less than half of the elongate flow channel 12c at a side corresponding the flow of liquid solvent "S", e.g. at the side of the corresponding input port 11s. Accordingly, light passing other parts of the channel may be blocked. For example, the light beam for measuring the spectrum is configured to exclusively traverse a region of the flow channel having at least initially a relatively large fraction of liquid solvent or pure liquid solvent.

FIG 5B illustrates a system 100 for spectroscopically analyzing a mixture "M" of different molecules M1,M2, e.g. as described herein. In some embodiments, the system comprises a container, e.g. sample cell 10, configured to provide a liquid volume "V" with the mixture "M" having an initial concentration difference $\Delta M$ between different sub-volumes Vm,Vs of the liquid volume "V" which are fluidly interconnected and arranged at different locations along a spatial coordinate "X". In other or further embodiments, the system comprises a measurement device, e.g. comprising a spectrometer 30 configured to measure a time-dependent spectrum a(t,v) of light L interacting with the liquid volume "V" at a measurement location "P" in (at least) one of the different sub-volumes Vm,Vs, while the concentration difference $\Delta M$ at least partially equilibrates by diffusion of the different molecules M1,M2 between the different sub-volumes Vm,Vs along the spatial coordinate "X".

In some embodiments, the system comprises a processing device 50 configure to receive and/or process the time-dependent spectrum a(t,v). For example, the spectrum can be processed while it is received and/or after it is received from the spectrometer and/or measurement device. In one embodiment, the processing device comprises a general purpose processor. In another or further embodiment, the processing device comprises dedicated circuitry to perform any of the methods as described herein. In some embodiments, the system comprises a clock which may be part of the measurement and/or processing device. Typically, the processing device 50 may comprise and/or access a (non-transitory) computer-readable medium storing instructions that, when executed causes the processing device to perform operational acts as described herein, e.g. process the time-dependent spectrum a(t,v). In one embodiment, the time-dependent spectrum a(t,v) is processed to determine respective distinct spectral signatures $\alpha 1,\alpha 2$ of the respective different molecules M1,M2, and/or determine respective distinct diffusion characteristics D1,D2 of the different molecules M1,M2 based on a distinct time-dependent evolution $\tau 1,\tau 2$ of each spectral signature $\alpha 1,\alpha 2$ in the time-dependent spectrum a(t,v).

Alternatively, or in addition to determining the spectral signatures $\alpha 1,\alpha 2$ and/or diffusion characteristics D1,D2 also other or related characteristics of the different molecules M1,M2 can be determined such as arrival time, molecular mass, relative size, type of molecule, et cetera. In principle various types of sample cells can be used to establish the initial concentration difference $\Delta M$, e.g. as described with reference to any one or more of FIGs 1,3,11,12. In a preferred embodiment, a sample cell 10 is used as described with reference to any one or more of FIGs 4A-4C,5A,6A,6B,7A.

In some embodiments, the system comprises a pumping arrangement 40 with a pumping device 42 configured to receive the mixture "M" and liquid solvent "S" and generate a set of parallel laminar flows Fm,Fs in the sample cell 10. For example, the pumping device 42 comprises one or more peristaltic or other type of pumps to generate at least two separate flows. Of course also separate pumping devices can be used, e.g. one for each flow. In one embodiment, the system, e.g. processing device 50 and/or other controller (not shown), is configured to control the pumping device 42 to stop (or substantially slow down) the flows when starting to measure the time-dependent spectrum a(t,v). For example, the flows are halted at a starting time T0. Accordingly, the system may measure the time-dependent spectrum a(t,v) including an indication of time (t) that has passed since the starting time T0. For example, the indication of time (t) can be recorded with each spectrum.

In some embodiments, the pumping arrangement 40 comprises a first reservoir 41m for holding the mixture "M" and/or a second reservoir 41s for holding the liquid solvent "S". In one embodiment, the reservoirs 41m,41s are connected to the sample cell 10 via the pumping device 42 to supply the mixture "M" and liquid solvent "S" to the first and second input ports 11m,11s, respectively. In another or further embodiment, the pumping arrangement 40 comprises a waste reservoir 43 connected to the at least one exit port 11e and configured to receive the mixture "M" and/or liquid solvent "S" after passing the sample cell 10.

In some embodiments, the spectrometer 30 comprises a spectral resolving element 31, e.g. grating, prism, or Fourier-transform (infrared) spectrometer. In other or further embodiments, the spectrometer 30 comprises a light sensor 32, e.g. pixel array configured to measure light intensity of infrared light or any other light. In one embodiment, e.g. as shown, the spectral resolving element 31 is configured to receive a light beam Lt having interacted with the liquid volume "V" in the sample cell 10, and send a spectrally resolved light beam Ls to the light sensor 32. Typically, a spectrometer may use a slit which is used to spatially shape the light which is imaged onto the light sensor 32, e.g. pixels. The sensing arrangement 30 may also comprise other or further optical components to shape and/or redirect the light beam, and or filter the light. For example, the sensing arrangement 30 may comprise a collimating lens 33. Alternatively, or additionally, also curved mirrors can be used.

In some embodiments, the spectrometer is configured to image the elongate flow channel 12c, or parts thereof, onto the light sensor 32. In other or further embodiments, the spectrometer is configured to image the slit 14s onto the light sensor 32. In one embodiment, the spectrometer comprises an optical system (not shown) having an object plane coinciding with the aperture, e.g. slit 14s, which is used to determine the measurement location "P", and an imaging plane coinciding with the light sensor 32. For example, a spectrally resolved image of the slit 14s is imaged onto a sensor array. Alternatively, or in addition, a single point, e.g. focus of the light beam "L0" through the slit, can be spectrally resolved and imaged onto the light sensor 32. It can also be envisaged to use a further slit (not shown), e.g. after refocusing all light passing the slit 14s adjacent the elongate flow channel 12c.

In some embodiments, the spectrometer 30 comprises or couples to a lighting device 20. In other or further embodiments, the lighting device 20 comprises a light source 21, e.g. infrared light source. For example, the light source comprises a lamp or laser. In one embodiment, the light source 21 is integrated as part of a measuring system. In another embodiment, the light source is separate. In one embodiment, e.g. as shown, the source light L0 from the light source 21 is focused at the measurement location "P" in the sample cell. For example, the light can be focused onto a slit, or the slit can be omitted. In another embodiment, an unfocused beam of light is used in combination with a limited aperture. Accordingly, it will be understood that the measurement location "P" may be determined by the position and/or extent of a physical aperture (e.g. slit overlapping part of the sample), a position and/or size of the light beam (e.g. focus), and/or combinations thereof.

In some embodiments, the system comprise a positioning device 15 configured to determine a position and/or size of the measurement location "P" relative to the different sub-volumes Vm,Vs in the sample cell 10. In one embodiment, the positioning device 15 is configured to adjust a position and/or size of a physical aperture overlapping part of the liquid volume "V" in the sample cell 10. In another or further embodiment, the positioning device 15 is configured to adjust a position and/or size of a light beam interacting with part of the liquid volume "V" in the sample cell 10. In another or further embodiment, the positioning device 15 is configured to adjust a position of the sample cell 10, e.g. relative to the physical aperture and/or relative to the position and/or focus of the light beam "L"0. Advantageously, by moving only the sample cell, the rest of the optical system, e.g. focal position, aperture position, et cetera, can remain static. Of course also combinations are possible for moving one or more components.

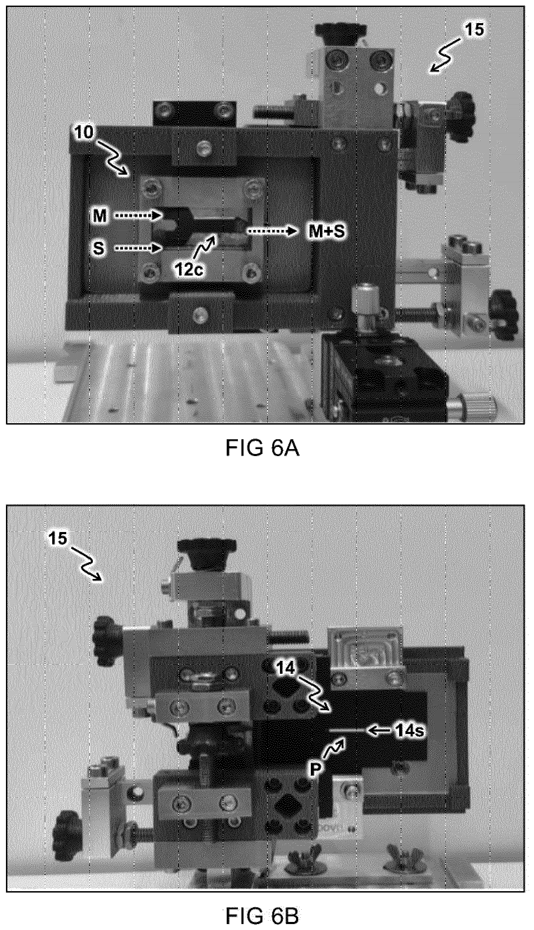

FIGs 6A and 6B illustrate photographs of a positioning device 15 configured to adjust a measurement location "P" in sample cell 10. In some embodiments, the system comprises one or more plates 14 forming a slit 14s overlapping part of the sample, e.g. elongate flow channel 12c. In other or further embodiments, the system comprises a positioning device 15 configured to adjust a position and/or size of the slit 14s relative to the different sub-volumes Vm,Vs in the sample, e.g. relative to the elongate flow channel 12c.

FIG 7A illustrates an infrared microscope image of a channel 12c while infusing as the mixture "M" a solution containing $D_2O$-PEG 2wt%-Acetone 4 wt%- Dialanine 60 mg/ml, and the liquid solution "S" containing $D_2O$-PEG 2wt%. The color bar represents the absorption intensity at the absorption frequency of the Acetone at 1699 $cm^{-1}$.

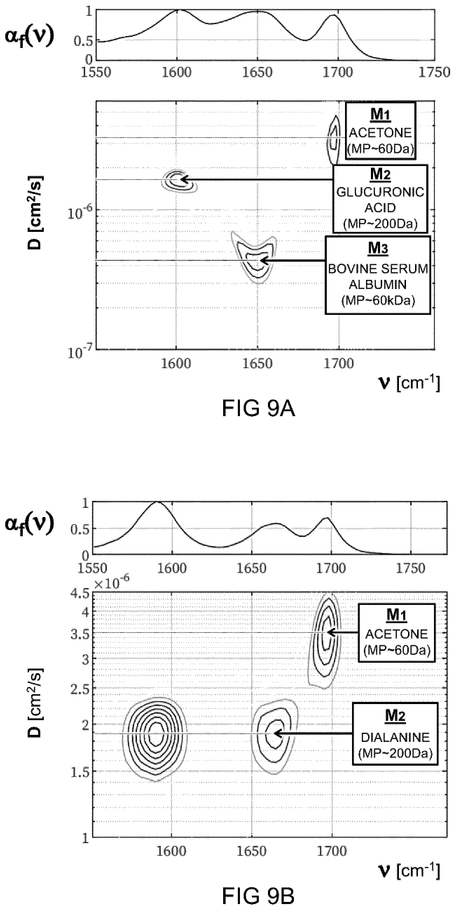

FIGs 7B and 7C illustrate infrared microscopes images at different times T after the flows have stopped. FIG 7B illustrates IR-microscope images of the channel cross-section taken at different time after stopping infusing representing the absorption intensities at an absorption frequency of 1699 $cm^{-1}$ characteristic for Acetone. FIG 7C illustrates similar images but at an absorption frequency of 1595 $cm^{-1}$ characteristic for Dialanine (see also FIG 9B). The absorption intensity is proportional to the concentration of the molecules. The IR-images were taken by scanning a light beam over the XY plane at a fixed focus by using an infrared microscope.

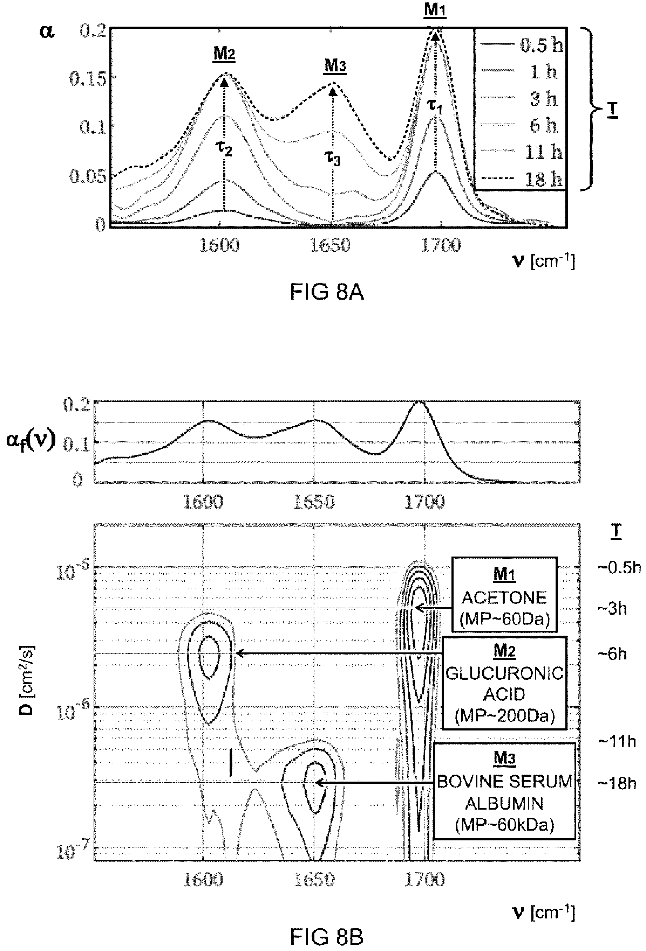

FIG 8A illustrates time-dependent infrared absorption spectra for a measurement of a mixture of different molecules M1,M2,M3 diffusing into view of a measurement location. As illustrated the different molecules have different absorption peaks which evolve (here increase) at different time rates $\tau 1$, $\tau 2$, $\tau 3$. FIG 8B illustrates a corresponding diffusion-ordered spectrogram. The spectrogram essentially represents a two dimensional contour plot of the absorption intensity as function of frequency "v" and diffusion coefficient. As shown, the time dependency can be converted to determine the corresponding diffusion coefficient "D". For example, the rescaling may be done based at least in part on a distance between the initial position of the mixture (e.g. initial liquid interface) and the measurement location (e.g. slit and/or focal point of the light beam). In this specific measurement, a mixture was used containing M1=Acetone (4 wt%); M2=glucuronic acid (40 mg/ml); M3 = bovine albumin serum (60 mg/ml). The measurements were performed using a Fourier transform infrared (FTIR) spectrometer in transmission mode. Of course it will be understood that the concept is not limited to the specific mixture or measurement setup.

FIG 9A and 9B illustrate further spectrograms. FIG 9A is similar to FIG 8B, but FIG 9A was obtained from spatially resolved data recorded using an IR microscope. In this case, the absorption data was obtained as a function of time and position, $\alpha(t,X)$, where X is the position in the direction perpendicular to the channel. FIG 9B shows a spectrogram illustrating the diffusion coefficient " D" as a function of frequency for a mixture containing Dialanine/Acetone. The time-dependent absorption profiles were extracted by averaging along the Y-direction the 2D-absorption data taken using the IR-microscope as shown in FIG 7B. The fact that the diffusion coefficients shown in FIG 8B and 9B are similar demonstrates that an FTIR-spectrometer can used just as well as an FTIR-microscope to determine the diffusion coefficient from the time-dependent absorption intensity. These figures also illustrate that the diffusion constant correlates with the molecular mass (here indicated in (kilo)Dalton).

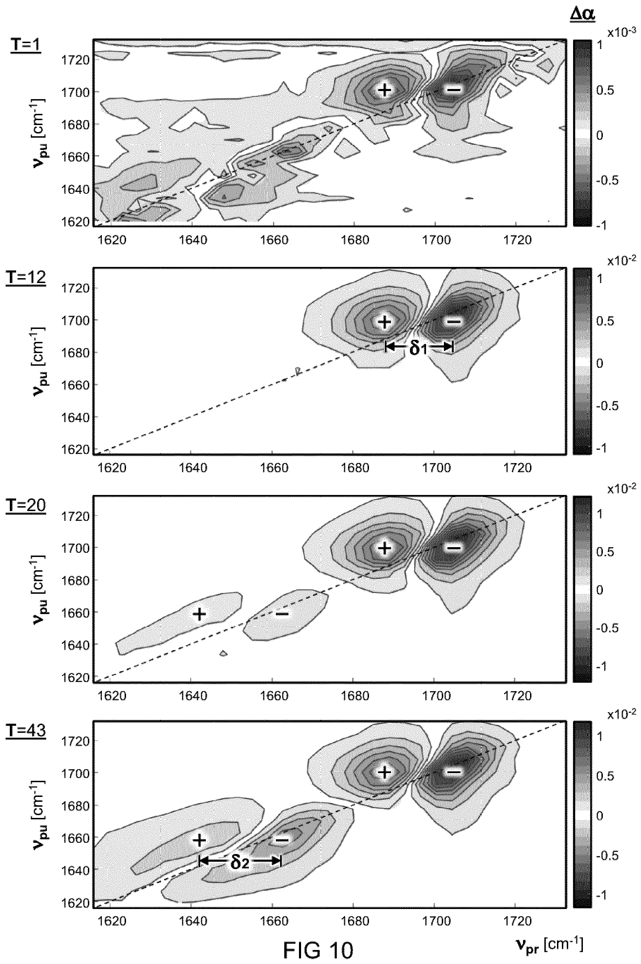

FIG 10 illustrates a two-dimensional infrared pump-probe spectrum recorded after stopping infusing in inlet 11m a mixture "M" containing $D_2O$-PEG 2wt%-Acetone 4%-Bovine Serum Albumin ("BSA") 50 mg/ml, and in inlet 11s a solution "S" containing $D_2O$-PEG 2wt%. Every scan from T=1 to T=43 reports the 2D-signal averaged for 15 minutes. Note that the first depicted scan at T=1 has a different scale compared to the other scans at T=12,20,43. The spectral hole $(v=0{\rightarrow}1)$ corresponding to the absorption peak of the Acetone appears first at 1700 cm$^{-1}$, while the spectral hole corresponding to the absorption peak of the BSA appears at later scans (T$\geq$20) at 1660 cm$^{-1}$. In this experiment, the 2D-absorption spectrum was measured at one single position at the end of the channel by using a slit in a home-built 2DIR setup described in ref. Huerta-Viga, A.; Shaw, D. J.; Woutersen, S. pH Dependence of the Conformation of Small Peptides Investigated with Two-Dimensional Vibrational Spectroscopy. Journal of Physical Chemistry B 2010, 114, 15212-15220. The waiting time between the pump and probe was 1 ps.

As will be appreciated, a two dimensional and/or pump-probe spectrum can reveal additional information beyond a linear spectrum. For example, the respective anharmonicity $\delta1$, $\delta2$ (difference between transitions $v=0{\rightarrow}1$ and $v=1{\rightarrow}2$, indicated by "-" and "+", respectively) can be determined for each molecule M1,M2 and used for further identification and/or structural analysis. It also illustrates that the present methods and systems are not limited to measuring linear spectra. For example, the same or similar features can also be applied using Raman spectroscopy, et cetera. It will also be understood that the spectral signatures $\alpha1,\alpha2$, as described herein are not limited to one dimensional spectra, but may include a multi-dimensional spectrum for each molecule, e.g. a series of 2D-spectra which evolve as function of time. Also other or further data structures and corresponding modeling can be envisaged. A common feature is, e.g., to track the distinct time-dependent evolution of distinct spectral feature for different molecules.

FIGs 11A-11C illustrate providing a liquid volume "V" with the mixture "M" having an initial concentration difference $\Delta M$ by removing a barrier 19 between different sub-volumes Vm,Vs. In some embodiments, a container, e.g. sample cell, comprises a liquid volume "V" with a barrier 19 initially separating a first sub-volume Vm from a second sub-volume Vs. For example, the first sub-volume Vm essentially consists of the mixture "M" and the second sub-volume Vs essentially consists of the liquid solvent "S". In one embodiment, the barrier 19 is removed at the start of a measurement. For example, the barrier 19 pulled out from between the sub-volumes Vm,Vs which allows the different molecules M1,M2 to start diffusing according to the concentration difference $\Delta M$ between the first sub-volume Vm and the second sub-volume Vs. Preferably, the barrier 19 is relatively thin, e.g. much less than one millimeter, so when it is pulled out from the liquid volume "V", minimal turbulence is created. Most preferably, the barrier 19 has a planar shape is pulled out along an in-plane direction to minimally displace liquid in the process.

In one embodiment, e.g. as shown, at least one measurement location Ps is located in the second sub-volume Vs, i.e. volume have relatively low and/or initially no concentration of the mixture "M" (e.g. pure liquid solvent "S"). In another or further embodiment, at least one measurement location Pm is located in the first sub-volume Vm, i.e. volume have relatively high or initial concentration of the mixture "M". In some embodiments, a time-dependent spectrum of light interacting with the liquid volume "V' is measured (simultaneously or consecutively) at two or more measurement locations Ps,Pm. In other or further embodiments, a concentration difference $\Delta M$ is measured using a first measurement location Pm in the first sub-volume Vm and a second measurement location Ps in the second sub-volume Vs. In one embodiment, a time-dependent spectrum a(t,v) of light L interacting with the liquid volume "V' is measured based on the measured concentration difference $\Delta M$ between different locations. For example, the first measurement location "Pm" in the first sub-volume Vm can act as a reference measurement and/or to improve measurement contrast of the time-evolving concentration difference ∆M between different sub-volumes. For example, this can help to alleviate other time-dependent variations such as temperature fluctuations of the liquid volume "V". It will be understood that the advantageous features with regards the measuring at two or more locations, e.g. as reference measurement, are not limited to the specific embodiment of FIG 11 but can be similarly applied in any of the embodiments as described herein, including FIGs 1 and 2. For example, two or more slits and/or beams can be used at different locations. Also more than two measurement locations can be used, e.g. a set of three, four, or more locations at different values of the spatial coordinate "X" (along the concentration gradient/difference ∆M, not necessarily at the same Y value). These and other features can also be applied in the embodiment of FIG 12.

FIGs 12A-12C illustrate providing a liquid volume "V" with the mixture "M" having an initial concentration difference ∆M between a first sub-volume Vm where the mixture "M" is added and a second sub-volume Vs comprising the measurement location "P". In principle respective spectral components of the different molecules M1,M2 can be extracted based on the time dependent spectrum as long as there is at least some effect of the different molecules M1,M2 diffusing into view (or out of view) of the measurement location "P" at different times T1,T2 depending on respective diffusion characteristics D1,D2 of the different molecules M1,M2. For example, the mixture can be (gently) added to a part of the solvent, or vice versa, while minimizing convection, e.g. turbulence, at least in a region of the second sub-volume Vs near the measurement location "P", e.g. measurement location "P". For example, the measurement location "P" can be located relatively far from the place where the mixture "M" is added to the liquid solvent "S". Preferably, e.g. as shown in FIGs 1A and 3B, the first sub-volume Vm containing the mixture "M" initially has a relatively uniform concentration of the different molecules M1,M2, e.g. to form a well-defined initial interface "I" between the volumes and allowing a definite distance Xp to be determined between the interface "I" and measurement position P, e.g. window, slit, focal point of the light beam, et cetera. However, this is also not strictly necessary as long as the diffusion characteristics D1,D2 still cause the different molecules M1,M2 to diffuse into view of the measurement location "P" at different times.

In some embodiments, the time dependent spectrum is measured by a light beam traversing a measurement area of the liquid solvent "S" while the mixture "M" of different molecules M1,M2 is introduced at an insertion location that is fluidly connected but remote from the measurement location "P". Preferably, said light beam does not traverse the insertion location. In other or further embodiments, measurement of the time-dependent spectrum a(t,v) starts with the measurement location "P" free of the mixture "M" and continues while the different molecules M1,M2 enter the measurement location "P" by respective diffusion. Of course, the measurement does not necessarily start at the exact time of insertion, and can also start while the equilibration process has already initiated but not yet finished.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1.  A method for spectroscopically analyzing a mixture (M) of different molecules (M1,M2), the method comprising

    providing a liquid volume (V) with the mixture (M) having an initial concentration difference (∆M) between different sub-volumes (Vm,Vs) of the liquid volume (V) which are fluidly interconnected and arranged at different locations along a spatial coordinate (X); and
    measuring a time-dependent spectrum ($\alpha[t,v]$) of light (L) interacting with the liquid volume (V) at a measurement location (P) in one of the different sub-volumes (Vm,Vs), while the concentration difference (∆M) at least partially equilibrates by diffusion of the different molecules (M1,M2) between the different sub-volumes (Vm,Vs) along the spatial coordinate (X);
    wherein the time-dependent spectrum ($\alpha[t,v]$) comprises respective distinct spectral signatures ($\alpha1,\alpha2$) of the respective different molecules (M1,M2), each spectral signature ($\alpha1,\alpha2$) having a distinct time-dependent evolution ($\tau1,\tau2$) in the time-dependent spectrum ($\alpha[t,v]$) resulting from respective distinct diffusion characteristics (D1,D2) of the different molecules (M1,M2).

2.  The method according to the preceding claim, wherein the concentration difference (∆M) in the liq-

uid volume (V) is provided by supplying a first concentration of the mixture (M), with the different molecules (M1,M2) to be analyzed, in a first sub-volume (Vm), wherein the first sub-volume (Vm) is fluidly connected to a second sub-volume (Vs) comprising a liquid solvent (S) suitable for dissolving the different molecules (M1,M2) to be analyzed, wherein the liquid solvent (S) in the second sub-volume (Vs) is provided at least initially without the mixture (M).

3. The method according to the preceding claim, wherein the first sub-volume (Vm) comprises the mixture (M) dissolved in the same liquid solvent (S) as forming the second sub-volume (Vs).

4. The method according to the preceding claim,

   wherein the second sub-volume (Vs) is adjacent the first sub-volume (Vm) and integrally connected via a liquid interface (I) extending in a direction (Y) perpendicular to the spatial coordinate (X) to form a contiguous liquid volume (V); wherein a light beam (L) which is used for measuring the time-dependent spectrum ($\alpha[t,v]$) exclusively interacts with a measurement location (P) which is exclusively located in the second sub-volume (Vs), at a measurement distance (Xp) from an initial liquid interface (I) between the first sub-volume (Vm) and the second sub-volume (Vs).

5. The method according to the preceding claim, wherein, initially,

   the first sub-volume (Vm) at one side of the liquid interface (I) essentially has a respective uniform concentration for each of the different molecules (M1,M2) to be analyzed in the mixture (M); and the second sub-volume (Vs) at the other side of the liquid interface (I) essentially does not contain the different molecules (M1,M2) to be analyzed in the mixture (M).

6. The method according to the preceding claim, wherein the first sub-volume (Vm) and second sub-volume (Vs) are provided by

   generating a pair of parallel laminar flows (Fm,Fs) including a first flow (Fm) comprising the mixture (M) of different molecules and an adjacent, second flow (Fs) comprising the liquid solvent (S), with a flow interface (If) between at least part of the first flow (Fm) and second flow (Fs); and halting the flows (Fm,Fs) to provide the first sub-volume (Vm) formed by the halted first flow (Fm) and the second sub-volume (Vs) formed by the halted second flow (Fs), wherein the first sub-volume (Vm) is in fluid connection with the second sub-volume (Vs) across a liquid interface (I) formed by the former flow interface (If).

7. The method according to the preceding claim, wherein the pair of parallel laminar flows (Fm,Fs) is generated in an elongate flow channel (12c), wherein the measurement location (P) has a limited measurement range ($\Delta X$), along the spatial coordinate (X), of less half a width (12w) of the elongate flow channel (12c).

8. The method according to any of the preceding claims, wherein the measurement location (P) is determined by an elongate slit (14s) having a length ($\Delta Y$) perpendicular to the spatial coordinate (X) and having a width ($\Delta X$) along the spatial coordinate (X) to limit the measurement range ($\Delta X$).

9. The method according to any of the preceding claims, wherein the measurement location (P) is determined by the shape of a light beam focused, at least along the spatial coordinate (X), in one of the different sub-volumes (Vm,Vs).

10. The method according to any of the preceding claims, wherein the mixture (M) is analyzed, based on the time-dependent spectrum ($\alpha[t,v]$), by at least one of

    determining the respective distinct spectral signatures ($\alpha1,\alpha2$) of the different molecules (M1,M2);
    determining the respective distinct diffusion characteristics (D1,D2) of the different molecules (M1,M2);
    determining a frequency and/or amplitude of spectral features in one or more spectral signatures ($\alpha1,\alpha2$) of the different molecules (M1,M2);
    determining a respective size of one or more of the different molecules (M1,M2) in the mixture (M);
    identifying one or more of the different molecules (M1,M2) in the mixture (M);
    determining one or more respective concentrations of the different molecules (M1,M2) in the mixture (M
    determining a molecular structure of one or more of the different molecules (M1,M2) in the mixture (M).

11. The method according to any of the preceding claims, wherein a first measurement location (Pm) is located in the first sub-volume (Vm) with the mixture (M) initially comprising the different molecules (M1,M2) to be analyzed, and a, distinct, second measurement location (Ps) is located in the second sub-volume (Vs) with the liquid solvent (S), initially comprising none of the different molecules (M1,M2, wherein the time-dependent spectrum ($\alpha$[t,v]) of light interacting with the liquid volume (V) is measured at both the first and second measurement locations (Ps,Pm) to determine a time-evolving concentration difference ($\Delta$M) between the different sub-volumes (Vm,Vs).

12. A system (100) for spectroscopically analyzing a mixture (M) of different molecules (M1,M2), the system comprising

sample cell (10) configured to provide a liquid volume (V) with the mixture (M) having an initial concentration difference ($\Delta$M) between different sub-volumes (Vm,Vs) of the liquid volume (V) which are fluidly interconnected and arranged at different locations along a spatial coordinate (X); and
a measurement device (20,30) comprising a spectrometer (30) configured to measure a time-dependent spectrum ($\alpha$[t,v]) of light (L) interacting with the liquid volume (V) at a measurement location (P) in one of the different sub-volumes (Vm,Vs), while the concentration difference ($\Delta$M) at least partially equilibrates by diffusion of the different molecules (M1,M2) between the different sub-volumes (Vm,Vs) along the spatial coordinate (X); and
a processing device (50) with a non-transitory computer-readable medium storing instructions that, when executed causes the processing device to process the time-dependent spectrum ($\alpha$[t,v]) to determine respective distinct spectral signatures ($\alpha$1,$\alpha$2) of the respective different molecules (M1,M2), and determine respective distinct diffusion characteristics (D 1,D2) of the different molecules (M1,M2) based on a distinct time-dependent evolution ($\tau$1,$\tau$2) of each spectral signature ($\alpha$1,$\alpha$2) in the time-dependent spectrum ($\alpha$[t,v]).

13. The system according to the preceding claim, wherein the sample cell (10) comprises

an elongate flow channel (12c);
a first input port (11m) for introducing the mixture (M) with different molecules (M1,M2) to be analyzed as a first flow (Fm) into the elongate flow channel (12c);
a second input port (11s) for introducing the liquid solvent (S) as a second flow (Fs) into the same elongate flow channel (12c), and
at least one exit port (11e) for the mixture (M) and/or liquid solvent (S) to exit the elongate flow channel (12c);
wherein the input ports (11m, 11s) are connected to the elongate flow channel (12c) via respective converging channels (12m, 12s) disposed adjacent each other in a direction transverse to a length of the elongate flow channel (12c) to create a set of parallel laminar flows (Fm,Fs), including the first flow (Fm) and the second flow (Fs), along the length of the elongate flow channel (12c) towards the at least one exit port (11e).

14. The system according to the preceding claim, comprising

at least one plate (14) forming a slit (14s) arranged to expose less than half of the elongate flow channel (12c), and
a positioning device (15) configured to adjust a position and/or size of the slit (14s) relative to the different sub-volumes (Vm,Vs) in the elongate flow channel (12c).

15. The system according to the preceding claim, wherein the system comprises a pumping arrangement (40) with a pumping device (42) configured to receive the mixture (M) and liquid solvent (S) and generate a set of parallel laminar flows (Fm,Fs) in the sample cell (10), wherein the system is configured control the pumping device (42) to stop the flows at a starting time (T0), and measure the time-dependent spectrum ($\alpha$[t,v]) including an indication of time (t) that has passed since the starting time (T0).

FIG 1A

FIG 1B

FIG 1C

FIG 2A

FIG 2B

FIG 2C

FIG 3A

FIG 3B

FIG 3C

FIG 4A

FIG 4B

FIG 4C

FIG 5A

FIG 5B

FIG 6A

FIG 6B

FIG 7A

FIG 7B

FIG 7C

FIG 8A

FIG 8B

FIG 9A

FIG 9B

FIG 10

FIG 11A

⟶ X

FIG 11B

FIG 11C

FIG 12A

FIG 12B

FIG 12C

Europäisches
Patentamt

European
Patent Office

Office européen
des brevets

# EUROPEAN SEARCH REPORT

Application Number

EP 22 16 6082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/184490 A1 (MARSHALL CHARLES MCALISTER [US] ET AL) 29 June 2017 (2017-06-29) * paragraphs [0001], [0044], [0047], [0052], [0065], [0089], [00090], [0094], [0096] * * paragraphs [0141], [0150] – [0158], [0202], [0247], [0273] * * figures 1-9,13,18-22,24,27 * | 1-15 | INV. G01N21/3577 ADD. G01N21/05 |
| X | US 2015/276589 A1 (WAGNER MATTHIAS [US] ET AL) 1 October 2015 (2015-10-01) * paragraphs [0028], [0072], [0156], [0167] * * figure 2 * | 1,2,4-7, 10,12, 13,15 | |
| A | IIYAMA TSUGUMASA ET AL: "Near-infrared imaging to quantify the diffusion coefficient of sodium pentaborate aqueous solution in a microchannel", CHEMICAL ENGINEERING SCIENCE, OXFORD, GB, vol. 254, 23 March 2022 (2022-03-23), XP087021181, ISSN: 0009-2509, DOI: 10.1016/J.CES.2022.117630 [retrieved on 2022-03-23] * abstract * | 1-15 | TECHNICAL FIELDS SEARCHED (IPC) G01N |

The present search report has been drawn up for all claims

| Place of search | Date of completion of the search | Examiner |
|---|---|---|
| Munich | 7 September 2022 | Brauer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 6082

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2022

| Patent document cited in search report | | Publication date | Patent family member(s) | | Publication date |
|---|---|---|---|---|---|
| US 2017184490 | A1 | 29-06-2017 | CN | 106461548 A | 22-02-2017 |
| | | | CN | 110702640 A | 17-01-2020 |
| | | | EP | 3123148 A1 | 01-02-2017 |
| | | | EP | 3722786 A1 | 14-10-2020 |
| | | | US | 2015276588 A1 | 01-10-2015 |
| | | | US | 2017184490 A1 | 29-06-2017 |
| | | | US | 2019226983 A1 | 25-07-2019 |
| | | | WO | 2015153449 A1 | 08-10-2015 |
| US 2015276589 | A1 | 01-10-2015 | US | 2015276589 A1 | 01-10-2015 |
| | | | US | 2017030823 A1 | 02-02-2017 |
| | | | US | 2018024041 A1 | 25-01-2018 |
| | | | US | 2019113436 A1 | 18-04-2019 |
| | | | US | 2020371014 A1 | 26-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUERTA-VIGA, A. ; SHAW, D. J. ; WOUTERSEN, S.** pH Dependence of the Conformation of Small Peptides Investigated with Two-Dimensional Vibrational Spectroscopy. *Journal of Physical Chemistry B,* 2010, vol. 114, 15212-15220